# EUROPÄISCHE PATENTSCHRIFT

(11) **EP 3 388 197 B1**
(45) Veröffentlichungstag und Bekanntmachung des Hinweises auf die Patenterteilung: **28.10.2020**
(21) Anmeldenummer: 17201625.5
(22) Anmeldetag: 14.11.2017
(51) Int. Cl.: B25B 1/08, B25B 1/10, B25B 1/24, B29C 59/02, B31F 1/07, B25B 1/02, B25B 1/18

(54) **PRÄGESTATION**
EMBOSSING STATION
STATION D'ESTAMPAGE

(30) Priorität: 08.12.2016 DE 102016224517
(43) Veröffentlichungstag der Anmeldung: 17.10.2018
(73) Patentinhaber: Lang Technik GmbH, 73271 Holzmaden (DE)
(72) Erfinder: Lang, Günter, 73249 Wernau (DE)
(74) Vertreter: Patentanwälte Magenbauer & Kollegen Partnerschaft mbB

(56) Entgegenhaltungen:
- CH-A2- 706 905
- DE-A1- 19 717 467
- DE-B1- 2 605 867
- DE-C- 801 980
- US-A- 5 954 320

## Beschreibung

Die Erfindung betrifft eine Prägestation zur lokalen plastischen Deformation eines Werkstückspannbereichs, mit wenigstens einer Prägebacke, die eine Spannfläche zur Anlage am Werkstückspannbereich aufweist, wobei von der Spannfläche wenigstens ein Prägevorsprung abragt, und mit wenigstens einer gegenüberliegend zur Prägebacke angeordneten Stützbacke, die zur Abstützung von Prägekräften auf den Werkstückspannbereich ausgebildet ist.

Aus der EP 1 071 542 B1 sind ein Spannsystem und ein Spannverfahren zum Spannen von Werkstücken bekannt, wobei für das Spannverfahren vorgesehen ist, in einem vorbereitenden Arbeitsschritt wenigstens eine Verformung mit Hilfe einer Prägeeinrichtung an dem Werkstück anzubringen, wobei die wenigstens eine Verformung lediglich als Kupplungselement beim Spannen mit einer entsprechenden Spannvorrichtung dient und sonst keine weitere Funktion hat, wobei die Prägevorrichtung gegenüberliegend angeordnete und mit Vorsprüngen versehene Prägebacken umfasst, die zur Einbringung der Verformungen in das Werkstück ausgebildet sind.

Aus der US 5,954,320 A ist eine Flachspannhalterung bekannt, die zwei die Backen zum Einspannen des Werkstückes tragende Schieber umfasst, welche gekoppelt sind, um sich spiegelbildlich bezüglich einer zur Spannrichtung senkrechten Ebene zu bewegen, womit ein Aufaddieren von einseitig wirkenden Fehlern in der Form des Werkstückes und der dieses bearbeitenden Werkzeugmaschine samt der darauf befestigten Halterung verhindert wird.

Die CH 706 905 A2 offenbart ein Spannmodul mit einem Grundkörper und einer Spannbacke, die relativ zum Grundkörper mit einer in diesem eingeschraubten Verspannschraube verstellbar ist, wobei Letztere mit einer zwischen ihr und der Spannbacke angeordneten Druckfeder versehen ist, durch deren Federkraft sich die Spannbacke selbsttätig beim Nachlassen der Verspannkraft nachstellt. Dadurch ist sichergestellt, dass die Verspannung des Werkstücks auch bei Auftreten von Vibrationen, plastischen Deformationen des Werkstücks und ähnlichen Einflüssen keine Lockerung erfährt, weil die Druckfeder bewirkt, dass die mit dem Federdruck beaufschlagte Spannbacke stets den erforderlichen Verspanndruck auf das eingespannte Werkstück aufrechterhält.

Aus der DE 197 17 467 A1 ist ein Spannstock mit einem Grundkörper und einer um ihre Längsachse drehbar im Grundkörper gelagerten Gewindespindel bekannt, wobei die Gewindespindel über einen ersten axialen Abschnitt ein rechtsgängiges Außengewinde und über einen zweiten axialen Abschnitt ein linksgängiges Außengewinde aufweist und wobei auf je ein Außengewinde ein Spannschieber aufgeschraubt ist, die jeweils am Grundkörper in Achsrichtung der Gewindespindel bewegbar geführt und gegen Verdrehen gesichert sind, so daß eine Drehung der Gewindespindel zu einer Axialbewegung der Spannschieber aufeinander zu und voneinander weg führt, wobei eine zwischen den Spannschiebern am Grundkörper angeordnete, feststehende Mittelbacke, gegen welche die beiden Spannschieber spannbar sind, vorgesehen ist und wobei zur einfachen Ermöglichung eines gleichzeitigen Einspannens zweier Werkstücke mit voneinander abweichenden Abmessungen die Gewindespindel zwischen den beiden Außengewinden unterteilt ist und eine lösbare Kupplungseinrichtung umfasst, durch welche die beiden Spindelteile drehfest miteinander kuppelbar sind.

Die Aufgabe der Erfindung besteht darin, eine Prägestation bereitzustellen, die für unterschiedlichste Werkzeugabmessungen geeignet ist.

Diese Aufgabe wird für eine Prägestation der eingangs genannten Art mit den Merkmalen des Anspruchs 1 gelöst. Hierbei ist eine Führungsanordnung vorgesehen, die für eine lineare Führung der Prägebacke und der Stützbacke ausgebildet ist, wobei eine Positionseinstellung der Prägebacke längs der Führungsanordnung mit einer ersten Getriebeanordnung erfolgen kann und eine Positionseinstellung der Stützbacke längs der Führungseinrichtung mit einer zweiten Getriebeanordnung erfolgen kann und eine Einstelleinrichtung vorgesehen ist, die zur Einstellung eines Abstands zwischen den beiden Getriebeanordnungen ausgebildet ist und die ein, insbesondere als Zugstange ausgebildetes, Zugmittel zur Einleitung einer Prägekraft auf die Prägebacke umfasst.

Um den Abstand zwischen der Prägebacke und der Stützbacke in einem breiten Intervall einstellen zu können, ist vorgesehen, sowohl die Prägebacke als auch die Stützbacke linearbeweglich an der Führungsanordnung anzuordnen, wobei die Führungsanordnung wenigstens eine Führungsfläche aufweist, die sich entlang eines Bewegungswegs bzw. einer Bewegungsachse für die Prägebacke und die Stützbacke erstreckt und die zur Aufnahme von Kräften der Prägebacke und der Stützbacke dient. Vorzugsweise ist für die linearbewegliche Führung der Prägebacke und der Stützbacke eine Gleitlagerung gegenüber der Führungsfläche an der Führungsanordnung vorgesehen. Alternativ ist zwischen der Prägebacke und der Führungsfläche und der Stützbacke und der Führungsfläche jeweils eine Wälzlagerung ausgebildet. Sowohl der Prägebacke als auch der Stützbacke ist jeweils eine Getriebeanordnung zugeordnet, die eine Veränderung der Position der Prägebacke und der Stützbacke längs des Bewegungswegs ermöglicht und hiermit eine Grobpositionierung der Prägebacke und der Stützbacke erleichtert. Ferner können die Getriebeanordnungen auch dazu vorgesehen werden, das mit Hilfe der Prägestation zu bearbeitende Werkstück vor der Durchführung des Prägevorgangs, insbesondere reibschlüssig, zu fixieren, um dann in einem anschließenden Schritt die Durchführung des Prägevorgangs mit Hilfe der Einstelleinrichtung vorzunehmen, die zur Veränderung eines Abstands zwischen den beiden Getriebeanordnungen ausgebildet ist. In der Praxis kann vorgesehen werden, das Werkstück zunächst mit geeigneten Auflagemitteln auf der Führungsanordnung aufzulegen oder abzustützen und die Prägebacke und die Stützbacke durch Verwendung der Getriebeanordnungen derart an den Werkstückspannbereich des Werkstücks anzunähern, dass das Werkstück zwischen der Prägebacke und der Stützbacke reibschlüssig aufgenommen ist und die Auflagemittel entfernt werden können.

In einem nachfolgenden Schritt wird durch Betätigung der Einstelleinrichtung ein Abstand zwischen den beiden Getriebeanordnungen verändert, um die Durchführung des Prägevorgangs zu bewirken, wobei hierzu eine Zugkraft auf das beispielhaft als Zugstange oder Zugseil ausgebildete Zugmittel eingeleitet wird, um eine Annäherung der Prägebacke an die Spannbacke zu erzielen. Hierbei kommt die Spannfläche der Prägebacke im Zuge des Prägevorgangs in flächige Anlage am Werkstückspannbereich. Hierdurch erfolgt eine sprunghafte Verkleinerung der Flächenpressung, die von der Prägebacke auf den Werkstückspannbereich eingeleitet wird, so dass keine weitere plastische Deformation des Werkstückspannbereichs erfolgt und damit eine Tiefenbegrenzung für eine Eindringtiefe des Prägevorsprungs in den Werkstückspannbereich gewährleistet ist. Die erste Getriebeanordnung und die zweite Getriebeanordnung können in unterschiedlicher Weise (z.B. als Gewindetrieb, Kugelumlauftrieb, Exzenteranordnung, Zahnstange/Ritzel-Kombination) ausgebildet sein. Bevorzugt ist vorgesehen, dass die erste Getriebeanordnung und die zweite Getriebeanordnung gleichartig ausgebildet sind, um eine kostengünstige Herstellung für die Komponenten der Prägestation zu gewährleisten.

Erfindungsgemäß ist vorgesehen, dass die Einstelleinrichtung einen schwenkbeweglich an der Führungsanordnung gelagerten Handhebel und ein Getriebemittel zur kinematischen Kopplung des Handhebels mit wenigstens einer der Getriebeanordnungen umfasst, wobei das Getriebemittel für eine Umsetzung einer Schwenkbewegung des Handhebels in eine Zugkraft auf das Zugmittel für eine lineare Relativbewegung der beiden Getriebeanordnungen ausgebildet ist. Bei dieser Ausführung der Prägestation ist eine manuelle Bereitstellung der Prägekraft vorgesehen, wobei die typischerweise hohen Prägekräfte, die zur Prägung von metallischen Werkstückspannbereichen erforderlich sind, mittels einer Bewegungsuntersetzung zwischen der Schwenkbewegung des Handhebels und der linearen Relativbewegung der beiden Getriebeanordnungen unter Zuhilfenahme des Getriebemittels erzeugt werden können. Exemplarisch kann das Getriebemittel als Exzenter ausgebildet sein, mit dessen Hilfe eine Schwenkbewegung des Handhebels entlang eines großen Schwenkwegs in eine deutlich kleinere, insbesondere um den Faktor 100 bis 1000 kleinere, lineare Relativbewegung der beiden Getriebeanordnungen umgesetzt werden kann, die als Zugkraft auf das Zugmittel eingeleitet wird. Hierbei tritt eine zur Untersetzung proportionale Kraftverstärkung um einen Faktor 100 bis 1000 auf.

Bei einer alternativen Ausgestaltung der Erfindung gemäß dem Anspruch 2 ist vorgesehen, dass die Einstelleinrichtung einen fremdkraftbetriebenen Linearaktor umfasst, der für eine Einleitung einer Zugkraft auf das Zugmittel für eine linearen Relativbewegung auf die beiden Getriebeanordnungen ausgebildet ist. Dabei kann der Linearaktor als Direktantrieb ausgebildet sein, der einen bereitgestellten Energiestrom (Fluidstrom, elektrischer Strom) unmittelbar in eine lineare Bewegung umwandelt. Typische Beispiele hierfür sind pneumatische Zylinder oder hydraulische Zylinder oder elektrische Lineardirektantriebe, insbesondere Magnetspulenantriebe. Alternativ kann der Linearaktor eine Kombination aus einem Linearantrieb oder einem Rotationsantrieb und einer nachgeschalteten Getriebeeinrichtung sein, wobei die Getriebeeinrichtung zur Bewegungsuntersetzung und gegebenenfalls zur Bewegungswandlung zwischen einer Rotationsbewegung und einer Linearbewegung vorgesehen ist. Dabei kann der Linearantrieb beziehungsweise der Rotationsantrieb insbesondere als pneumatischer, hydraulischer oder elektrischer Antrieb ausgebildet sein.

In weiterer Ausgestaltung der Erfindung ist vorgesehen, dass die erste Getriebeanordnung eine erste Gewindespindel und einen in der Prägebacke ausgebildeten Gewindeabschnitt umfasst und dass die zweite Getriebeanordnung eine zweite Gewindespindel und einen in der Stützbacke ausgebildeten Gewindeabschnitt umfasst, wobei wenigstens eine der Gewindespindeln linearbeweglich und drehfest mit einem Antriebsritzel gekoppelt ist und wobei das Antriebsritzel für eine Einleitung einer Rotationsbewegung auf die Gewindespindeln zur synchronen Abstandeinstellung zwischen der Prägebacke und der Stützbacke ausgebildet ist. Aufgrund der Gestaltung der Führungsanordnung sowie der Prägebacke und der Stützbacke weisen die Prägebacke und die Stützbacke bezüglich der Führungsanordnung lediglich einen einzigen, ausschließlich linearen Freiheitsgrad der Bewegung gegenüber der Führungsanordnung auf. Hierdurch wird gewährleistet, dass eine in die jeweils zugeordnete Gewindespindel eingeleitete Rotationsbewegung durch die Wechselwirkung der Gewindespindel mit dem jeweiligen Gewindeabschnitt in eine translatorische / lineare Bewegung der Prägebacke / Stützbacke umgesetzt wird. Um die gewünschte Abstandseinstellung zwischen der Prägebacke und der Stützbacke gewährleisten zu können, sind die erste Gewindespindel und die zweite Gewindespindel mit unterschiedlicher Gewindesteigung, insbesondere mit einem Linksgewinde und einem Rechtsgewinde versehen. Vorzugsweise sind die Gewindespindeln und die korrespondierenden Gewindeabschnitte mit einem Trapezgewinde versehen. Alternativ können die Gewindeabschnitte in der Art von Kugelumlaufmuttern ausgebildet sein, deren umlaufende Kugeln in ein entsprechendes Kugelgewinde eingreifen, das an den Gewindespindeln ausgebildet ist. Vorzugsweise ist vorgesehen, dass die Gewindeabschnitte jeweils in separat ausgebildeten Gewindehülsen eingebracht sind, die ihrerseits in die Prägebacke und/oder die Stützbacke ortsfest montiert werden. Durch diese Maßnahme kann eine günstige Werkstoffauswahl für die Prägebacke, die Stützbacke und die jeweiligen Gewindeabschnitte erfolgen. Bevorzugt ist vorgesehen, dass das Antriebsritzel zwischen der ersten und der zweiten Gewindespindel angeordnet ist. Besonders bevorzugt ist vorgesehen, dass das Antriebsritzel fest mit einer der Gewindespindeln und/oder mit dem Zugmittel verbunden ist. Ergänzend oder alternativ kann vorgesehen sein, dass jede der Getriebeeinrichtungen wenigstens zwei Gewindespindeln und zugeordnete Gewindeabschnitte aufweist, um eine besonders vorteilhafte Krafteinleitung zwischen den Getriebeeinrichtungen und der zugeordneten Prägebacke bzw. Stützbacke zu gewährleisten.

Bei einer weiteren Ausgestaltung der Erfindung ist vorgesehen, dass das Antriebsritzel mit einer manuell betätigten oder fremdkraftbetätigten Antriebseinrichtung gekoppelt ist, die zur Einleitung einer Drehbewegung auf das Antriebsritzel ausgebildet ist und die an der Führungsanordnung abgestützt ist. Die Aufgabe der Antriebseinrichtung besteht darin, eine Rotationsbewegung auf das Antriebsritzel einzuleiten. Hierbei kann eine manuell von einem Benutzer eingeleitete Rotationsbewegung oder eine Rotationsbewegung eines pneumatischen, hydraulischen oder elektrischen Antriebsmittels (Pneumatikmotor, Hydraulikmotor, Elektromotor) durch ein Rädergetriebe, ein Kegelradgetriebe, einen Riemenantrieb, einen Kettenantrieb, einen Schneckenantrieb oder eine Kombination hiervon in eine Rotationsbewegung des Antriebsritzels umgesetzt werden. Um eine vorteilhafte Drehmomentabstützung für das Antriebsritzel zu gewährleisten, ist die Antriebseinrichtung an der Führungsanordnung abgestützt, sodass ein Kraftfluss zwischen Antriebseinrichtung und Antriebsritzel sowie den damit gekoppelten Getriebeanordnungen der Prägebacke und der Stützbacke an der Führungsanordnung aufgenommen werden kann. Unabhängig von der Gestaltung der Antriebseinrichtung kann vorgesehen sein, dass der Führungsanordnung und/oder der Prägebacke und/oder der Stützbacke eine Messeinrichtung zugeordnet ist, die für eine unmittelbare optische Erfassung durch einen Benutzer oder für eine automatisierte Auswertung mittels eines geeigneten Sensorsystems ausgebildet ist und eine Erfassung der Position der Prägebacke und/oder der Stützbacke längs des Bewegungswegs an der Führungsanordnung ermöglicht. Eine Bereitstellung von Bewegungsenergie an die fremdkraftbetätigte Antriebseinrichtung kann unter Zwischenschaltung einer Steuerung oder bei zusätzlicher Verwendung eines Sensorsystems einer geeigneten Regelung vorgenommen werden. Beispielhaft kann die Antriebseinrichtung als elektrischer Schrittmotor ausgebildet sein, bei dem eine Vorgabe der durchzuführenden Bewegungsschritte von der zugeordneten Steuerung erfolgen kann, um die gewünschte Abstandseinstellung für die prägebacke und die Stützbacke zu bewirken. Alternativ kann die fremdkraftbetätigte Antriebseinrichtung exemplarisch als Elektromotor mit zugeordnetem Drehsensor ausgebildet sein, so dass eine Abstandseinstellung für die Prägebacke und die Stützbacke anhand einer Ermittlung von Umdrehungen des Elektromotors vorgenommen werden kann.

In weiterer Ausgestaltung der Erfindung ist die Einstelleinrichtung zwischen dem Antriebsritzel und einer der beiden Gewindespindeln angeordnet. Hierdurch wird eine besonders kompakte Gestaltung der Prägestation ermöglicht, da eine Bewegungseinleitung auf die beiden Gewindespindeln unmittelbar im Bereich der gegenüberliegenden Stirnflächen der beiden Gewindespindeln erfolgt. Beispielhaft ist die Einstelleinrichtung als Fluidzylinder, insbesondere als hydraulischer oder pneumatischer Kurzhubzylinder, ausgebildet und stellt bei kurzem Hub eine für die Durchführung des Prägevorgangs erforderliche Prägekraft in direkter Weise an die Gewindespindeln zur Verfügung. Die hierfür notwendige fluidische Energie kann durch eine geeignete Fluidpumpe, im Falle eines Hydraulikzylinders insbesondere mittels eines pneumatisch-hydraulischen Wandlers bereitgestellt werden. Das Zugmittel kann dabei mit einer Kolbenstange oder mit einem Zylindergehäuse des Fluidzylinders gekoppelt sein.

Bei einer alternativen Ausgestaltung der Erfindung ist vorgesehen, dass der Linearaktor an einer dem Antriebsritzel abgewandten Stirnseite der ersten Gewindespindel angeordnet und abgestützt ist und mit der zweiten Gewindespindel über das Zugmittel verbunden ist. Bei dieser Ausgestaltung der Prägestation ist vorteilhaft, dass der Linearaktor in seiner Dimensionierung und hinsichtlich der Anschlüsse zur Zuführung und/oder Abführung von Energie in einem breiten Spektrum ausgewählt werden kann, weil keine Rücksicht auf Platzbeschränkungen genommen werden muss, wie dies bei einer Anordnung des Linearaktors zwischen den beiden Gewindespindeln der Fall ist. Um eine vorteilhafte Einleitung von Kräften auf die Gewindespindeln zu gewährleisten, ist das Zugmittel beispielhaft mit der zweiten Gewindespindel verbunden und kann somit insbesondere als Zugseil oder Zugstange zur Übertragung von Zugkräften eingesetzt werden, die von dem, insbesondere an der Stirnseite der ersten Gewindespindel abgestützten, Linearaktor bereitgestellt werden, um die Prägekraft auf die Prägebacke einzuleiten.

Besonders vorteilhaft ist es, wenn die Gewindespindel eine Ausnehmung aufweist, in der das Zugmittel aufgenommen ist. Hierbei kann vorgesehen sein, dass nur die erste Gewindespindel mit einer Ausnehmung versehen ist, in der das Zugmittel aufgenommen ist, wodurch eine kompakte Anordnung des Zugmittels gewährleistet werden kann. In diesem Fall ist das Zugmittel an einer Stirnseite der zweiten Gewindespindel oder an dem Antriebsritzel, das mit der zweiten Gewindespindel verbunden sein kann, befestigt oder einteilig mit der zweiten Gewindespindel, insbesondere mit der zweiten Gewindespindel und dem Antriebsritzel, ausgebildet. Bei einer Weiterbildung der Gewindespindeln ist vorgesehen, dass beide Gewindespindeln mit einer Ausnehmung zur Aufnahme des Zugmittels versehen sind, sodass die Gewindespindeln abgesehen von ihrer unterschiedlichen Gewindesteigung als Gleichteile ausgebildet werden können und eine Abstützung des Zugmittels an einer dem Antriebsritzel abgewandten Stirnseite der zweiten Gewindespindel vorgesehen werden kann, wodurch auch die Gestaltung des Zugmittels einfach gehalten werden kann. Hierbei ist ferner vorgesehen, dass das Zugmittel auch das Antriebsritzel durchsetzt, sofern dieses zwischen den beiden Gewindespindeln angeordnet ist.

Bevorzugt ist vorgesehen, dass die Gewindespindel und das Antriebsritzel zueinander korrespondierende Vorsprünge und Ausnehmungen aufweisen und eine Stiftkupplung oder Klauenkupplung ausbilden. Bei einer Stiftkupplung sind wenigstens zwei parallel zu einer Achsrichtung der Gewindespindel und des Antriebsritzels ausgerichtete Stifte vorgesehen, die in Ausnehmungen in der Gewindespindel und im Antriebsritzel eingreifen und gegebenenfalls in der Gewindespindel oder im Antriebsritzel festgelegt sind und die die gewünschte Linearbeweglichkeit der Gewindespindel gegenüber dem Antriebsritzel bei gleichzeitiger Drehmomentübertragung gewährleisten. Bei einer Klauenkupplung greifen jeweils an einer ersten Stirnfläche ausgebildete kreissegmentartige Vorsprünge in korrespondierende, kreissegmentartige Vertiefungen der gegenüberliegenden, zweiten Stirnfläche ein. Vorzugsweise ist vorgesehen, dass die Stirnflächen der Gewindespindel und des Antriebsritzels mit Vorsprüngen und Vertiefungen in jeweils gleicher Winkelteilung ausgestattet sind.

Bevorzugt ist vorgesehen, dass zwischen Gewindespindel und Antriebsritzel wenigstens eine Federeinrichtung angeordnet ist, die einen Bewegungsspalt zwischen der Gewindespindel und dem Antriebsritzel gewährleistet. Die Federeinrichtung kann beispielhaft als Wandelfeder oder als Tellerfederpaket ausgebildet sein, um bei Abwesenheit einer Prägekraft einen ausreichenden Bewegungsspalt zwischen der Gewindespindel und dem Antriebsritzel aufrechtzuerhalten.

Ferner betrifft die Erfindung eine Prägestation zur lokalen plastischen Deformation eines Werkstückspannbereichs, mit wenigstens einer Prägebacke, die eine Spannfläche zur Anlage am Werkstückspannbereich aufweist, wobei von der Spannfläche wenigstens ein Prägevorsprung abragt, und mit wenigstens einer gegenüberliegend zur Prägebacke angeordneten Stützbacke, die zur Abstützung von Prägekräften auf den Werkstückspannbereich ausgebildet ist, mit einer Führungsanordnung, die für eine lineare Führung der Prägebacke und der Stützbacke ausgebildet ist, mit einer Einstelleinrichtung, die zur Einstellung eines Abstands zwischen den beiden Getriebeanordnungen ausgebildet ist und die ein Zugmittel zur Einleitung einer Prägekraft auf die Prägebacke umfasst, wobei die erste Getriebeanordnung eine erste Gewindespindel und einen in der Prägebacke ausgebildeten Gewindeabschnitt umfasst, wobei die zweite Getriebeanordnung eine zweite Gewindespindel und einen in der Stützbacke ausgebildeten Gewindeabschnitt umfasst, wobei die Gewindespindeln jeweils eine Ausnehmung aufweisen, in der das Zugmittel aufgenommen ist und wobei die Einstelleinrichtung einen fremdkraftbetriebenen Linearaktor umfasst, der für eine Einleitung einer Zugkraft auf das Zugmittel für eine lineare Relativbewegung der beiden Getriebeanordnungen ausgebildet ist.

Bei einer Ausgestaltung der Erfindung ist vorgesehen, dass, wobei wenigstens eine der Gewindespindeln linearbeweglich und drehfest mit einem Antriebsritzel gekoppelt ist und dass das Antriebsritzel für eine Einkopplung einer Rotationsbewegung auf die Gewindespindeln zur synchronen Abstandseinstellung zwischen der Prägebacke und der Stützbacke ausgebildet ist.

Bei einer Ausgestaltung der Erfindung ist vorgesehen, dass das Antriebsritzel mit einer manuell betätigten oder fremdkraftbetätigten Antriebseinrichtung gekoppelt ist, die zur Einleitung einer Drehbewegung auf das Antriebsritzel ausgebildet ist und die an der Führungsanordnung abgestützt ist.

Bei einer Ausgestaltung der Erfindung ist vorgesehen, dass der Linearaktor an einer dem Antriebsritzel abgewandten Stirnseite der Gewindespindel angeordnet und abgestützt ist und mit der anderen Gewindespindel über das Zugmittel verbunden ist.

Vorteilhafte Ausführungsformen der Erfindung sind in der Zeichnung dargestellt. Hierbei zeigt:
- Figur 1: eine schematische Vorderansicht einer Prägestation mit einer Prägebacke, einer Stützbacke, einer Führungsanordnung, einer ersten Ausführungsform einer Einstelleinrichtung und einer Antriebseinrichtung,
- Figur 1a: eine Detaildarstellung zur Figur 1,
- Figur 2: eine zweite Ausführungsform einer Einstelleinrichtung,
- Figur 3: eine dritte Ausführungsform einer Einstelleinrichtung, und
- Figur 4: eine schematische Seitenansicht der Prägestation gemäß der Figur 1.

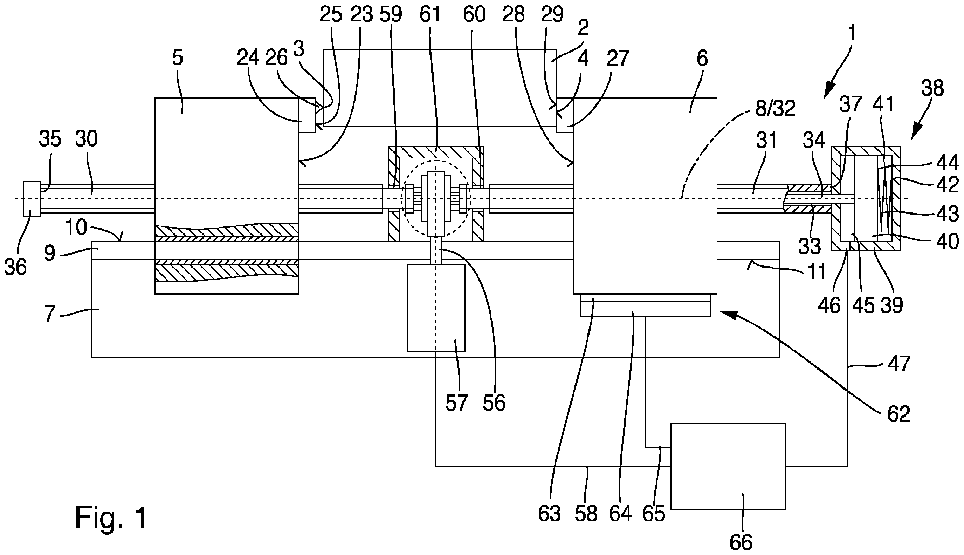

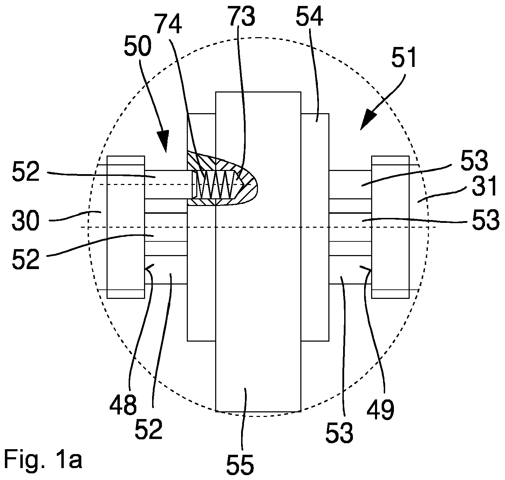

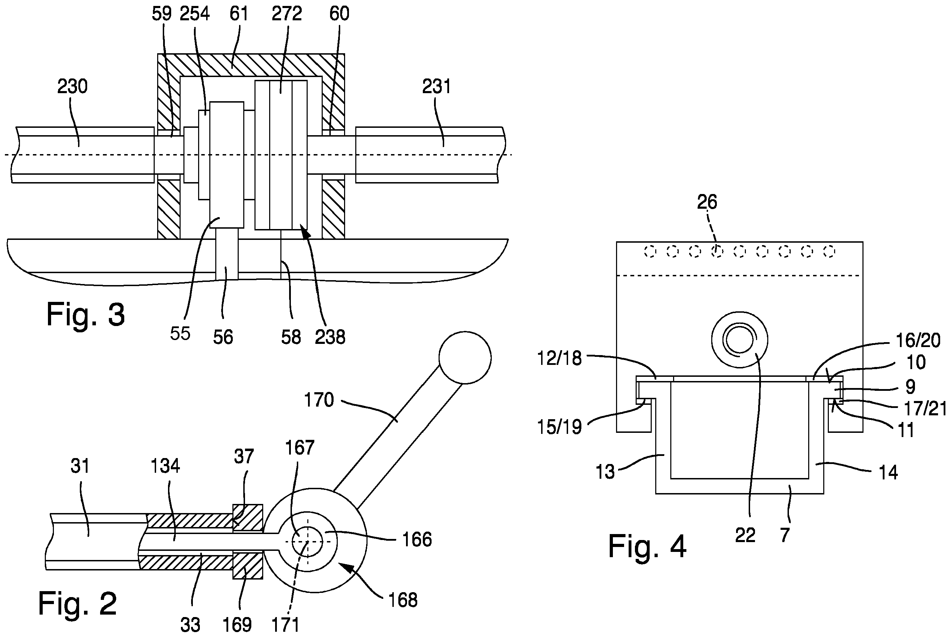

Eine in den Figuren 1, 1a und 4 schematisch in unterschiedlichen Ansichten dargestellte Prägestation 1 ist zur lokalen plastischen Deformation eines Werkstückspannbereichs 3, 4 eines rein exemplarisch plattenförmig ausgebildeten Werkstücks 2 vorgesehen. Bei dem Werkstücks 2 kann es sich beispielsweise um einen Rohling aus einem metallischem Material handeln, der in einer nachfolgenden Bearbeitungsabfolge in einer nicht dargestellten Spanneinrichtung aufgenommen und mit nicht dargestellten Bearbeitungsmitteln, insbesondere spanend, bearbeitet wird. Um ein reproduzierbares Einspannen des Werkstücks 2 in der wenigstens einen, nicht dargestellten Spanneinrichtung zu ermöglichen, ist vor der Durchführung der Bearbeitungsabfolge die Einbringung wenigstens einer Einprägung an dem Werkstückspannbereich 3, 4 des Werkstücks 2 vorgesehen. Die nicht näher dargestellte Einprägung dient bei der nachfolgenden Aufnahme des Werkstücks 2 in der wenigstens einen Spanneinrichtung als mechanische Referenz für die Einspannung des Werkstücks 2.

Die Prägestation 1 dient demnach der Vorbereitung des nachfolgenden Bearbeitungsablaufs durch Einbringung der wenigstens einen Prägung in das Werkstück 2. Hierzu umfasst die Prägestation 1 eine Prägebacke 5 sowie eine gegenüberliegend zur Prägebacke 5 angeordnete Stützbacke 6. Die Prägebacke 5 und die Stützbacke 6 sind jeweils mit einer nachstehend näher beschriebenen Gleitführung linearbeweglich an einer Führungsanordnung 7 geführt. Die Führungsanordnung 7, die auch als Grundkörper der Prägestation 1 angesehen werden, weist gemäß der Darstellung der Figur 4 in nicht dargestellten Querschnittsebenen, die normal zu einer Bewegungsachse 8 ausgerichtet sind, eine U-förmige Profilierung auf. Hierbei sind an den nach oben ausgerichteten freien Schenkeln 13, 14 der U-förmigen Profilierung jeweils rechtwinklig abragende, rechteckig profilierte Führungsleisten 9 angeordnet.

Die Prägebacke 5 und die Stützbacke 6 umgreifen jeweils bereichsweise die beidseitig an der Führungsanordnung 7 angebrachten Führungsleisten 9, so dass Rotationsbewegungen der Prägebacke 5 und der Stützbacke 6 unterbunden werden und die gewünschte Beschränkung einer Bewegungsfreiheit für die Prägebacke 5 und die Stützbacke 6 auf genau einen linearen Freiheitsgrad der Bewegung erzielt wird. Wie insbesondere aus der Seitenansicht gemäß der Figur 4 entnommen werden kann, ist die Prägebacke 5, die beispielhaft aus einem quaderförmigen Metallteil hergestellt werden kann, an einer Unterseite mit einer längs der Bewegungsachse 8 erstreckten, zur Profilierung der Führungsanordnung 7 korrespondierenden Profilierung ausgestattet. Hierbei weist die Prägebacke 5 jeweils gegenüberliegend zu einer oberen Führungsfläche 10 sowie einer unteren Führungsfläche 11 der Führungsleiste 9 jeweils rechteckig profilierte Ausnehmungen 12, 15, 16, 17 auf. In den Ausnehmungen 12, 15, 16, 17 sind jeweils Gleitlagerleisten 18, 19, 20, 21 aufgenommen, die exemplarisch aus einem formstabilen Kunststoffmaterial (beispielsweise Polyetheretherketon / PEEK oder Polyoxymethylen / POM) hergestellt sind und die eine reibungsarme Lagerung der Prägebacke 5 an der Führungsanordnung 7 gewährleisten.

Wie der Figur 4 weiter entnommen werden kann, ist in der Prägebacke 5 eine Gewindebuchse 22 eingebracht, die aus einem metallischem Material hergestellt werden kann und die als Gewindeabschnitt für die nachstehend näher beschriebene Getriebeanordnung zur linearen Verstellung der Position der Prägebacke 5 dient. Die Gewindebuchse 22 ist in nicht näher dargestellter Weise ortsfest in der Prägebacke 5 aufgenommen und kann aus einem Material hergestellt sein, das für die Getriebefunktion günstige Eigenschaften aufweist, beispielsweise Messing.

Wie aus der Darstellung der Figur 1 entnommen werden kann, ist an einer der Stützbacke 6 zugewandten Vorderseite 23 der Prägebacke 5 eine rein exemplarisch mit rechteckigem Querschnitt ausgebildete Kontaktleiste 24 angebracht, die vorzugsweise auswechselbar an der Prägebacke 5 angebracht ist. die Kontaktleiste 24 weist rein exemplarisch eine Spannfläche 25 auf, an der entlang einer normal zur Darstellungsebene der Figur 1 angeordnete, geometrisch identische Prägevorsprünge 26 ausgebildet sind, von denen jedoch aufgrund ihrer räumlichen Ausrichtung nur der vorderste Prägevorsprung 26 in der Figur 1 sichtbar ist.

Die Stützbacke 6 ist rein exemplarisch in gleicher Weise wie die Prägebacke 5 ausgeführt und unterscheidet sich lediglich durch die Ausgestaltung der Kontaktleiste 27, die an der gegenüberliegend zur Prägebacke ausgerichteten Vorderseite 28 angeordnet ist, jedoch abweichend von der Kontaktleiste 24 an ihrer Spannfläche 29 keine Prägevorsprünge aufweist. Bei einer nicht dargestellten Ausführungsform der Stützbacke ist die zugeordnete Kontaktleiste ebenfalls mit Prägevorsprüngen versehen, die in identischer oder abweichender Anordnung relativ zu den Prägevorsprüngen 26 an der Kontaktleiste 24 der Prägebacke 5 ausgerichtet sein können.

Ferner unterscheidet sich die Stützbacke 6 von der Prägebacke 5 dadurch, dass die zugeordnete, in der Figur 1 nicht sichtbare Gewindebuchse eine zur Gewindebuchse 22 entgegengesetzte Steigung aufweist. Beispielhaft ist vorgesehen, dass die Gewindebuchse 22 der Prägebacke 5 mit einem Rechtsgewinde ausgerüstet ist, während die nicht dargestellte Gewindebuchse der Stützbacke 6 mit einem Linksgewinde ausgerüstet ist. Alternativ kann auch vorgesehen sein, dass beide Gewindebuchsen mit gleichsinniger, jedoch im Steigungswinkel unterschiedlicher Gewindesteigung versehen sind.

Wie aus den Darstellungen der Figuren 1 und 4 entnommen werden kann, werden die Gewindebuchse 22 der Prägebacke 5 und die nicht dargestellte Gewindebuchse der Stützbacke 6 jeweils von einer Gewindespindel 30, 31 durchsetzt. Rein exemplarisch ist vorgesehen, dass eine Mittelachse 32 der koaxial zueinander ausgerichteten Gewindespindeln 30, 31 parallel zur Bewegungsachse 8 ausgerichtet ist. Ferner ist vorgesehen, dass beide Gewindespindeln 30, 31 entlang ihrer gesamten Erstreckung von einer rein exemplarisch als zentrische, kreisrunde Bohrung ausgebildeten Ausnehmung 33 durchsetzt sind. Somit kann ein exemplarisch als Koppelstange ausgebildetes Zugmittel 34 sowohl die Gewindespindel 30 als auch die Gewindespindel 31 durchsetzen. Rein exemplarisch ist vorgesehen, dass die Gewindespindel 30 korrespondierend zur Gewindebuchse 22 mit einem Rechtsgewinde versehen ist, während die Gewindespindel 31 korrespondierend zur nicht dargestellten Gewindebuchse der Stützbacke 6 mit einem Linksgewinde ausgerüstet ist.

Das Zugmittel 34 ist an einer der Stützbacke 6 abgewandten Stirnseite 35 der Gewindespindel 30 mit einem Anschlussstück 36 versehen, das flächig an der Stirnseite 35 anliegt und das eine formschlüssige Kopplung des Zugmittels 34 mit der Gewindespindel 30 in Bezug auf Zugkräfte gewährleistet, die auf das Zugmittel 34 eingeleitet werden. An einer der Prägebacke 5 abgewandten Stirnseite 37 der zweiten Gewindespindel 31 ist rein exemplarisch ein Aktor 38 angeordnet, der zur Einleitung von Zugkräften auf das Zugmittel 34 ausgebildet ist. Beispielhaft ist der Aktor 38 als einfachwirkender Hydraulikzylinder ausgebildet, dessen Zylindergehäuse 39 an der Stirnseite 37 der Gewindespindel 31 anliegt und dessen Arbeitskolben 40, der linearbeweglich in einer Zylinderbohrung 41 im Zylindergehäuse 39 aufgenommen ist, mit dem Zugmittel 34 gekoppelt ist.

Ferner ist rein exemplarisch an einer dem Zugmittel 34 abgewandten Rückseite 42 des Arbeitskolbens 40 eine Rückstellfeder 43 angelegt, die sich an einer Innenoberfläche 44 des Zylindergehäuses 39 abstützt. Eine vom Zylindergehäuse 39 und dem Arbeitskolben 40 ausgebildete Arbeitsausnehmung 45 des Aktors 38 steht über eine Anschlussbohrung 46 in fluidisch kommunizierender Verbindung mit einer Versorgungsleitung 47, durch die ein hydraulisches Arbeitsfluid in die Arbeitsausnehmung zugeführt oder aus der Arbeitsausnehmung 45 abgeführt werden kann.

Um bei einer Einleitung von Zugkräften auf das Zugmittel 34 mit Hilfe des Aktors 38 eine Relativbewegung der durch die Gewindebuchsen 22 und die Gewindespindeln 30, 31 gebildeten Getriebeanordnungen zu ermöglichen, ist eine linearbewegliche Kopplung der beiden Gewindespindeln 30, 31 an einander gegenüberliegenden Stirnseiten 48, 49 vorgesehen, wie dies in der Figur 1a näher dargestellt ist. Rein exemplarisch wird die Linearbeweglichkeit der beiden Gewindespindeln 30, 31 durch Stiftkupplungen 50, 51 erreicht, bei denen jeweils parallel zur Bewegungsachse 8 ausgerichtete Passstifte 52, 53 ortsfest in die Stirnseiten 48, 49 der Gewindespindeln 30, 31 eingebracht sind.

Wie aus der Ausschnittvergrößerung der Figur 1a entnommen werden kann, greifen die Passstifte 52, 53 mit ihren freien Endbereichen in ein Antriebsritzel 54 ein, das mittig zwischen den beiden Gewindespindeln 30, 31 angeordnet ist und dessen Rotationssymmetrieachse konzentrisch zur Mittelachse 32 der Gewindespindeln 30, 31 ausgerichtet ist. Rein exemplarisch ist das Antriebsritzel 54 als Schneckenrad ausgebildet, in das eine Schnecke 55 eingreift, die ihrerseits mit einer Antriebswelle 56 eines Antriebsmotors 57 gekoppelt ist. Bei dem Antriebsmotor 57 kann es sich insbesondere um einen Hydraulikmotor handeln, der über eine Versorgungsleitung 58 mit hydraulischen Arbeitsfluid versorgt werden kann, um eine Rotationsbewegung der Schnecke 55 und eine daraus resultierende Rotationsbewegung des Antriebsritzels 54 um die Mittelachse 32 zu bewirken.

Rein exemplarisch kann vorgesehen sein, dass das Antriebsritzel 54 mehrere parallel zur Mittelachse 32 ausgerichtete Bohrungen 73 aufweist, in die die Passstifte 52, 53 der Gewindespindeln 30, 31 eingreifen, um die linearbewegliche und drehfeste Kopplung zwischen den Gewindespindeln 30, 31 und dem Antriebsritzel 54 zu erzielen. Beispielhaft ist in der Bohrung 73 eine Wendelfeder 74 aufgenommen, die bei der Einleitung der Prägekraft auf die Prägebacke 5 komprimiert wird und nach Abklingen der Prägekraft eine Rückstellung der Stiftkupplung 50, 51 in die Ausgangsstellung gemäß der Figur 1 gewährleistet. Bei einer nicht näher dargestellten Ausführungsform sind den Passstiften jeweils Tellerfederpakete zugeordnet.

Ferner ist rein exemplarisch vorgesehen, dass der Antriebsmotor 57 in nicht näher dargestellter Weise an der Führungsanordnung 7 festgelegt ist. Durch die linearbewegliche und drehfeste Kopplung der Gewindespindeln 30, 31 mit dem Antriebsritzel 54 mittels der Stiftkupplungen 50, 51 können die Gewindespindeln 30, 31 bei Einleitung einer Zugkraft vom Aktor 38 auf das Zugmittel 34 eine lineare Annäherungsbewegung relativ zueinander durchführen. Im Rahmen der Relativbewegung dringt der Prägevorsprung 26 in den Werkstückspannbereich 3 des Werkstücks 2 ein und das Werkstück wird aufgrund der geringen Auflagefläche des Prägevorsprungs 26 am Werkstück 2 und der damit einhergehenden hohen Flächenpressung plastisch deformiert, bis die Spannfläche 25 der Kontaktleiste 24 in flächige Anlage mit dem Werkstückspannbereich 3 gelangt. Hierdurch wird die Flächenpressung sprunghaft reduziert, so dass keine weitere plastische Deformation des Werkstücks 2 stattfindet und die gewünschte Prägetiefe für die im Werkstück 2 zu erzeugende Prägung erreicht ist.

Um während der Durchführung des Prägevorgangs eine vorteilhafte Abstützung der Gewindespindeln 30, 31 zu gewährleisten, sind jeweils in unmittelbarer Nachbarschaft zu den gegenüberliegenden Stirnseiten 48, 49 zylinderabschnittsförmige Lagerflächen 59, 60 an den Gewindespindeln 30, 31 ausgebildet, die rein exemplarisch von einem Stützgehäuse 61 umgeben sind, das an der Führungsanordnung 7 festgelegt ist und das zusätzlich als Getriebegehäuse für das Antriebsritzel 54 sowie die Schnecke 55 dient.

Ferner ist rein exemplarisch vorgesehen, dass zumindest an der Stützbacke 6 ein Wegmesssystem 62 angeordnet ist, das einen mit der Stützbacke 6 gekoppelten Maßkörper 63 sowie einen an der Führungsanordnung 7 festgelegten Wegsensor 64 umfasst und eine Positionsbestimmung für die Stützbacke 6 längs der Bewegungsachse 8 ermöglicht. Der Wegsensor 64 ist über eine Sensorleitung 65 mit einer Steuereinrichtung 66 verbunden, die beispielhaft für eine Bereitstellung von Fluidströmen über die Versorgungsleitungen 47 und 58 an den Aktor 38 sowie den Antriebsmotor 57 ausgebildet ist und für eine Steuerung oder Regelung der Bewegungen der Prägebacke 5 und der Stützbacke 6 ausgebildet ist. Bei einer nicht dargestellten Ausführungsform kann zusätzlich auch der Prägebacke ein Wegmesssystem zugeordnet werden, bei einer ebenfalls nicht dargestellten Ausführungsform wird gänzlich auf Wegmesssysteme für die Stützbacke und die Prägebacke verzichtet.

In der Figur 2 ist eine alternative Ausführungsform für die Einstelleinrichtung gezeigt, die bei der Ausführungsform gemäß der Figur 1 durch den Aktor 38 gebildet wird. Demgegenüber ist bei der Figur 2 vorgesehen, das Zugmittel 134 endseitig mit einem Koppelauge 166 zu versehen, in das ein Exzenterbolzen 167 einer Exzenteranordnung 168 eingreift. Die Exzenteranordnung 168 ist an einer Druckplatte 169 abgestützt, die ihrerseits an der Stirnseite 37 der Gewindespindel 31 anliegt. Die Exzenteranordnung 168 umfasst weiterhin einen Handhebel 170, mit dem eine Schwenkbewegung der Exzenteranordnung 168 um ein Drehzentrum 171 (mit einer normal zur Darstellungsebene der Figur 2 ausgerichteten Drehachse) eingeleitet werden kann. Durch die Schwenkbewegung der Exzenteranordnung 168 wird eine axiale Verlagerung des Zugmittels 134 bewirkt, wodurch die Einleitung der Prägekraft auf die Prägebacke 5 erzielt wird.

Bei der in Figur 3 dargestellten alternativen Ausführungsform für die Bereitstellung einer Prägekraft auf die Gewindespindeln 230, 231 ist vorgesehen, dass die als hydraulischer Aktor 238 ausgebildete Einstelleinrichtung mit dem Antriebsritzel 254 gekoppelt ist und eine unmittelbare Einkopplung einer linearen Relativbewegung in das Antriebsritzel 254 und die damit gekoppelte Gewindespindel 230 sowie in die Gewindespindel 231 ermöglicht. Vorzugsweise ist eine drehfeste Kopplung des hydraulischen Aktors 238 sowohl mit dem Antriebsritzel 254 als auch mit der Gewindespindel 231 vorgesehen. Ferner ist der Aktor 238 als solcher drehfest ausgebildet. Dementsprechend muss für eine Zuführung von Betätigungsenergie auf den hydraulischen Aktor 238 eine nur schematisch dargestellte, drehbeweglich am hydraulischen Aktor 238 angebrachte, Hydraulikkupplung 272 vorgesehen werden.

Nachstehend soll kurz umrissen werden, in welcher Weise die Prägestation 1 gemäß der Figur 1 oder auch die Abwandlungen für die Einstelleinrichtung 168, 238 gemäß den Figuren 2 und 3 eingesetzten werden kann, um eine lokale Prägung eines Werkstückspannbereichs 3 eines Werkstücks 2 hervorzurufen.

Dabei wird davon ausgegangen, dass für die Prägestation 1 gemäß der Darstellung der Figur 1 zunächst eine Grobeinstellung der Positionen der Prägebacke 5 und der Stützbacke 6 erfolgt. Dies geschieht durch eine Drehbewegung des Antriebsmotors 57 aufgrund einer entsprechenden Bereitstellung von Betätigungsenergie in Form eine Hydraulikfluidstroms durch die Steuereinrichtung 66.

Bei einer nicht dargestellten Ausführungsform kann auch eine manuelle Bereitstellung einer Drehbewegung auf die Schnecke oder eine anders geartete Getriebeeinrichtung zur Rotation der beiden Gewindespindeln 30, 31 vorgesehen sein.

Beispielhaft ist bei der Prägestation 1 vorgesehen, die Prägebacke 5 und die Stützbacke 6 durch gleichsinnige Rotation der Gewindespindeln 30, 31, die exemplarisch mit entgegengesetzten Gewindesteigungen versehen sind, zunächst so weit auseinander zu fahren, dass das Werkstück 2, gegebenenfalls unter Zuhilfenahme nicht dargestellter Abstandsmittel, auf die Oberseite des Stützgehäuses 61 aufgelegt werden kann.

In einem nachfolgenden Schritt werden durch Betätigung des Antriebsmotors 57 die Prägebacke 5 und die Stützbacke 6 derart an das Werkstück 2 angenähert, dass die Kontaktleiste 27 der Stützbacke 6 sowie der Prägevorsprung 26 der Kontaktleiste 24 in Anlage an die Werkstückspannbereiche 3, 4 des Werkstücks 2 angelegt werden und das Werkstück 2 reibschlüssig gehalten wird. Nach Entfernen der nicht dargestellten Abstandsmittel ist eine statisch bestimmte Anlage der Werkstückspannbereiche 3, 4 am Prägevorsprung 26 sowie der Spannfläche 29 der Kontaktleiste 27 gewährleistet.

Anschließend wird eine relative lineare Verlagerung der beiden Gewindespindeln 30, 31 beziehungsweise 230, 231 durch Betätigung des jeweiligen Einstellmittels 38 oder 168 oder 238 hervorgerufen, wodurch sich der Prägevorsprung 26 in den Werkstückspannbereich 3 des Werkstücks 2 im Rahmen einer plastischen Deformation in den Werkstückspannbereich 3 einformt, um hier eine Prägung zu hinterlassen, die nachfolgend für eine reproduzierbare Einspannung des Werkstücks 2 in einer nicht dargestellten Spanneinrichtung verwendet werden kann.

Anschließend wird durch entsprechende Betätigung des Einstellmittels 38, 238 die Prägekraft aufgehoben, ferner werden die Prägebacke 5 und die Stützbacke 6 voneinander entfernt, sodass das Werkstück 2 entnommen werden kann.

## Patentansprüche

1. Prägestation zur lokalen plastischen Deformation eines Werkstückspannbereichs (3, 4), mit wenigstens einer Prägebacke (5), die eine Spannfläche (25) zur Anlage am Werkstückspannbereich (3, 4) aufweist, wobei von der Spannfläche (25) wenigstens ein Prägevorsprung (26) abragt, und mit wenigstens einer gegenüberliegend zur Prägebacke (5) angeordneten Stützbacke (6), die zur Abstützung von Prägekräften auf den Werkstückspannbereich (3, 4) ausgebildet ist, mit einer Führungsanordnung (7), die für eine lineare Führung der Prägebacke (5) und der Stützbacke (6) ausgebildet ist, und einer ersten Getriebeanordnung (22, 30), die für eine Positionseinstellung der Prägebacke (5) längs der Führungsanordnung (7) ausgebildet ist, und einer zweiten Getriebeanordnung (31), die für eine Positionseinstellung der Stützbacke (6) längs der Führungsanordnung (7) ausgebildet ist, und einer Einstelleinrichtung (38; 168; 238), die zur Einstellung eines Abstands zwischen den beiden Getriebeanordnungen (22, 30, 31) ausgebildet ist und die ein, insbesondere als Zugstange ausgebildetes, Zugmittel (34; 134) zur Einleitung einer Prägekraft auf die Prägebacke (5) umfasst, wobei die Einstelleinrichtung (168) einen schwenkbeweglich an der Führungsanordnung gelagerten Handhebel (170) und ein Getriebemittel (168) zur kinematischen Kopplung des Handhebels (170) mit dem Zugmittel (34; 134), das mit wenigstens einer der Getriebeanordnungen (22, 30, 31) gekoppelt ist, umfasst, wobei das Getriebemittel (168) für eine Umsetzung einer Schwenkbewegung des Handhebels (170) in eine Zugkraft auf das Zugmittel (34; 134) für eine lineare Relativbewegung der beiden Getriebeanordnungen (22, 30, 31) ausgebildet ist.

2. Prägestation zur lokalen plastischen Deformation eines Werkstückspannbereichs (3, 4), mit wenigstens einer Prägebacke (5), die eine Spannfläche (25) zur Anlage am Werkstückspannbereich (3, 4) aufweist, wobei von der Spannfläche (25) wenigstens ein Prägevorsprung (26) abragt, und mit wenigstens einer gegenüberliegend zur Prägebacke (5) angeordneten Stützbacke (6), die zur Abstützung von Prägekräften auf den Werkstückspannbereich (3, 4) ausgebildet ist, **gekennzeichnet durch** eine Führungsanordnung (7), die für eine lineare Führung der Prägebacke (5) und der Stützbacke (6) ausgebildet ist, und eine erste Getriebeanordnung (22, 30), die für eine Positionseinstellung der Prägebacke (5) längs der Führungsanordnung (7) ausgebildet ist, und eine zweite Getriebeanordnung (31), die für eine Positionseinstellung der Stützbacke (6) längs der Führungsanordnung (7) ausgebildet ist, und eine Einstelleinrichtung (38; 168; 238), die zur Einstellung eines Abstands zwischen den beiden Getriebeanordnungen (22, 30, 31) ausgebildet ist und die ein, insbesondere als Zugstange ausgebildetes, Zugmittel (34; 134) zur Einleitung einer Prägekraft auf die Prägebacke (5) umfasst, wobei die Einstelleinrichtung (38, 238) einen fremdkraftbetriebenen Linearaktor umfasst, der für eine Einleitung einer Zugkraft auf das Zugmittel (34; 134) für eine lineare Relativbewegung der beiden Getriebeanordnungen (22, 30, 31; 230, 231) ausgebildet ist.

3. Prägestation nach Anspruch 1 oder 2, **dadurch gekennzeichnet, dass** die erste Getriebeanordnung (22, 30; 230) eine erste Gewindespindel (30; 230) und einen in der Prägebacke (5) ausgebildeten Gewindeabschnitt (22) umfasst und dass die zweite Getriebeanordnung (31; 231) eine zweite Gewindespindel (31; 231) und einen in der Stützbacke (6) ausgebildeten Gewindeabschnitt umfasst, wobei wenigstens eine der Gewindespindeln (30, 31; 230; 231) linearbeweglich und drehfest mit einem Antriebsritzel (54; 254) gekoppelt ist und wobei das Antriebsritzel (54; 254) für eine Einkopplung einer Rotationsbewegung auf die Gewindespindeln (30, 31; 230, 231) zur synchronen Abstandseinstellung zwischen der Prägebacke (5) und der Stützbacke (6) ausgebildet ist.

4. Prägestation nach Anspruch 3, **dadurch gekennzeichnet, dass** das Antriebsritzel (54; 254) mit einer manuell betätigten oder fremdkraftbetätigten Antriebseinrichtung (57) gekoppelt ist, die zur Einleitung einer Drehbewegung auf das Antriebsritzel (54; 254) ausgebildet ist und die an der Führungsanordnung (7) abgestützt ist.

5. Prägestation nach Anspruch 3 oder 4, **dadurch gekennzeichnet, dass** die Einstelleinrichtung (238) zwischen dem Antriebsritzel (254) und einer der beiden Gewindespindeln (230, 231) angeordnet ist.

6. Prägestation nach Anspruch 3 oder 4, **dadurch gekennzeichnet, dass** der Linearaktor (38) an einer dem Antriebsritzel (54) abgewandten Stirnseite (37) der zweiten Gewindespindel (31) angeordnet und abgestützt ist und mit der ersten Gewindespindel (30) über das Zugmittel (34) verbunden ist.

7. Prägestation nach Anspruch 6, **dadurch gekennzeichnet, dass** die zweite Gewindespindel (31) eine Ausnehmung (33) aufweist, in der das Zugmittel (34; 134) aufgenommen ist.

8. Prägestation nach einem der Ansprüche 4 bis 7, **dadurch gekennzeichnet, dass** die erste Gewindespindel (30) und das Antriebsritzel (54) und/oder die zweite /oder die zweite Gewindespindel (30, 31) und das Antriebsritzel (54) zueinander korrespondierende Vorsprünge (52, 53) und Ausnehmungen (73) aufweisen und eine Stiftkupplung (50, 51) oder Klauenkupplung ausbilden.

9. Prägestation nach Anspruch 7, **dadurch gekennzeichnet, dass** zwischen der ersten Gewindespindel (30) und dem Antriebsritzel (54) und/oder zwischen der zweiten Gewindespindel (31) und dem Antriebsritzel (54) wenigstens eine Federeinrichtung (74) angeordnet ist, die einen Bewegungsspalt zwischen der ersten Gewindespindel (30) und dem Antriebsritzel (54) und/oder zwischen der zweiten Gewindespindel (31) und dem Antriebsritzel (54) gewährleistet.

10. Prägestation zur lokalen plastischen Deformation eines Werkstückspannbereichs (3, 4), mit wenigstens einer Prägebacke (5), die eine Spannfläche (25) zur Anlage am Werkstückspannbereich (3, 4) aufweist, wobei von der Spannfläche (25) wenigstens ein Prägevorsprung (26) abragt, und mit wenigstens einer gegenüberliegend zur Prägebacke (5) angeordneten Stützbacke (6), die zur Abstützung von Prägekräften auf den Werkstückspannbereich (3, 4) ausgebildet ist, mit einer Führungsanordnung (7), die für eine lineare Führung der Prägebacke (5) und der Stützbacke (6) ausgebildet ist, mit einer Einstelleinrichtung (38; 168; 238), die zur Einstellung eines Abstands zwischen einer ersten Getriebeanordnung (22, 30, 230) und einer zweiten Getriebeanordnung (31; 231) ausgebildet ist und die ein Zugmittel (34; 134) zur Einleitung einer Prägekraft auf die Prägebacke (5) umfasst, wobei die erste Getriebeanordnung (22, 30; 230) eine erste Gewindespindel (30; 230) und einen in der Prägebacke (5) ausgebildeten Gewindeabschnitt (22) umfasst, wobei die zweite Getriebeanordnung (31; 231) eine zweite Gewindespindel (31; 231) und einen in der Stützbacke (6) ausgebildeten Gewindeabschnitt umfasst, wobei die Gewindespindeln (30, 31) jeweils eine Ausnehmung (33) aufweisen, in der das Zugmittel (34; 134) aufgenommen ist und wobei die Einstelleinrichtung (38, 238) einen fremdkraftbetriebenen Linearaktor umfasst, der für eine Einleitung einer Zugkraft auf das Zugmittel (34; 134) für eine lineare Relativbewegung der beiden Getriebeanordnungen (22, 30, 31; 230, 231) ausgebildet ist.

11. Prägestation nach Anspruch 10, **dadurch gekennzeichnet, dass**, wobei wenigstens eine der Gewindespindeln (30, 31; 230; 231) linearbeweglich und drehfest mit einem Antriebsritzel (54; 254) gekoppelt ist und wobei das Antriebsritzel (54; 254) für eine Einkopplung einer Rotationsbewegung auf die Gewindespindeln (30, 31; 230, 231) zur synchronen Abstandseinstellung zwischen der Prägebacke (5) und der Stützbacke (6) ausgebildet ist.

12. Prägestation nach Anspruch 11, **dadurch gekennzeichnet, dass** das Antriebsritzel (54; 254) mit einer manuell betätigten oder fremdkraftbetätigten Antriebseinrichtung (57) gekoppelt ist, die zur Einleitung einer Drehbewegung auf das Antriebsritzel (54; 254) ausgebildet ist und die an der Führungsanordnung (7) abgestützt ist.

13. Prägestation nach Anspruch 10, 11 oder 12, **dadurch gekennzeichnet, dass** der Linearaktor (38) an einer dem Antriebsritzel (54) abgewandten Stirnseite (37) der Gewindespindel (31) angeordnet und abgestützt ist und mit der anderen Gewindespindel (30) über das Zugmittel (34) verbunden ist.

## Claims

1. Embossing station for local plastic deformation of a workpiece clamping area (3, 4), with at least one embossing jaw (5), which has a clamping surface (25) for contact with the workpiece clamping area (3, 4), at least one embossing protrusion (26) projecting from the clamping surface (25), and with at least one supporting jaw (6) arranged opposite the embossing jaw (5), which is designed to support embossing forces acting on the workpiece clamping area (3, 4), with a guide arrangement (7), which is designed for a linear guidance of the embossing jaw (5) and the supporting jaw (6), and with a first gear arrangement (22, 30), which is designed for position adjustment of the embossing jaw (5) along the guide arrangement (7), and with a second gear arrangement (31), which is designed for position adjustment of the supporting jaw (6) along the guide arrangement (7), and with an adjusting device (38); 168; 238), which is designed for setting a distance between the two gear arrangements (22, 30, 31) and which comprises a traction means (34; 134), designed in particular as a pull rod, for introducing an embossing force onto the embossing jaw (5), the setting device (168) comprising a hand lever (170) mounted pivotably on the guide arrangement (7) and a gear means (168) for kinematically coupling the hand lever (170) to the traction means (34); 134), which is coupled to at least one of the gear arrangements (22, 30, 31), wherein the gear means (168) is designed for converting a pivoting movement of the hand lever (170) into a pulling force on the traction means (34; 134) for a linear relative movement of the two gear arrangements (22, 30, 31).

2. Embossing station for local plastic deformation of a workpiece clamping area (3, 4), with at least one embossing jaw (5), which has a clamping surface (25) for contact with the workpiece clamping area (3, 4), at least one embossing protrusion (26) projecting from the clamping surface (25), and with at least one support jaw (6) arranged opposite the embossing jaw (5), which is designed to support embossing forces on the workpiece clamping area (3, 4), **characterized by** a guide arrangement (7) adapted to linearly guide the embossing jaw (5) and the support jaw (6), and a first gear arrangement (22, 30) adapted to positionally adjust the embossing jaw (5) along the guide arrangement (7), and a second gear arrangement (31) adapted to positionally adjust the support jaw (6) along the guide arrangement (7), and an adjusting device (38); 168; 238), which is designed to set a distance between the two gear arrangements (22, 30, 31) and which comprises a traction means (34; 134), designed in particular as a pull rod, for introducing an embossing force onto the embossing jaw (5), the setting device (38, 238) comprising an externally powered linear actuator which is designed to introduce a traction force onto the traction means (34; 134) for a linear relative movement of the two gear arrangements (22, 30, 31; 230, 231).

3. Embossing station according to claim 1 or 2, **characterized in that** the first gear arrangement (22, 30; 230) comprises a first threaded spindle (30; 230) and a threaded portion (22) formed in the embossing jaw (5), and that the second gear arrangement (31; 231) comprises a second threaded spindle (31; 231) and a threaded portion formed in the support jaw (6), wherein at least one of the threaded spindles (30, 31; 230, 231) is coupled in a linearly movable and rotationally fixed manner to a drive pinion (54; 254) and wherein the drive pinion (54; 254) is designed for coupling a rotational movement to the threaded spindles (30, 31; 230, 231) for synchronous distance adjustment between the embossing jaw (5) and the support jaw (6).

4. Embossing station according to claim 3, **characterized in that** the drive pinion (54; 254) is coupled to a manually operated or externally powered drive device (57) which is designed to initiate a rotational movement on the drive pinion (54; 254) and which is supported on the guide arrangement (7) .

5. Embossing station according to claim 3 or 4, **characterized in that** the adjusting device (238) is arranged between the drive pinion (254) and one of the two threaded spindles (230, 231).

6. Embossing station according to claim 3 or 4, **characterized in that** the linear actuator (38) is arranged and supported at an end face (37) of the second threaded spindle (31) facing away from the drive pinion (54) and is connected to the first threaded spindle (30) via the traction means (34) .

7. Embossing station according to claim 6, **characterized in that** the second threaded spindle (31) has a recess (33) in which the traction means (34; 134) is received.

8. Embossing station according to one of claims 4 to 7, **characterized in that** the first threaded spindle (30) and the drive pinion (54) and/or the second threaded spindle (30, 31) and the drive pinion (54) have projections (52, 53) and recesses (73) corresponding to one another to form a pin coupling (50, 51) or a claw coupling.

9. Embossing station according to claim 7, **characterized in that** at least one spring device (74) is arranged between the first threaded spindle (30) and the drive pinion (54) and/or between the second threaded spindle (31) and the drive pinion (54), which spring device ensures a movement gap between the first threaded spindle (30) and the drive pinion (54) and/or between the second threaded spindle (31) and the drive pinion (54) .

10. Embossing station for local plastic deformation of a workpiece clamping area (3, 4), with at least one embossing jaw (5), which has a clamping surface (25) for contact with the workpiece clamping area (3, 4), wherein at least one embossing protrusion (26) projects from the clamping surface (25), and with at least one supporting jaw (6) arranged opposite the embossing jaw (5), which is designed to support embossing forces acting on the workpiece clamping area (3, 4), with a guide arrangement (7) which is designed for a linear guidance of the embossing jaw (5) and the supporting jaw (6), with an adjusting device (38); 168; 238), which is designed for adjusting a distance between a first gear arrangement (22, 30, 230) and a second gear arrangement (31; 231) and which comprises a traction means (34; 134) for initiating an embossing force on the embossing die (5), the first gear arrangement (22, 30; 230) comprising a first threaded spindle (30; 230) and a threaded section (22) formed in the embossing die (5), the second gear arrangement (31; 231) comprising a second threaded spindle (31; 231) 231) and a threaded section formed in the support jaw (6), wherein the threaded spindles (30, 31) each have a recess (33) in which the traction means (34; 134) is accommodated, and wherein the adjusting device (38, 238) comprises an externally powered linear actuator which is designed to introduce a tensile force on the traction means (34; 134) for a linear relative movement of the two gear arrangements (22, 30, 31; 230, 231).

11. Embossing station according to claim 10, **characterized in that**, wherein at least one of the threaded spindles (30, 31; 230, 231) is linearly movably and non-rotatably coupled to a drive pinion (54; 254) and wherein the drive pinion (54; 254) is designed for coupling a rotational movement to the threaded spindles (30, 31; 230, 231) for synchronous distance adjustment between the embossing jaw (5) and the support jaw (6) .

12. Embossing station according to claim 11, **characterized in that** the drive pinion (54; 254) is coupled to a manually operated or externally powered drive device (57) which is designed to initiate a rotational movement on the drive pinion (54; 254) and which is supported on the guide arrangement (7).

13. Embossing station according to claim 10, 11 or 12, **characterized in that** the linear actuator (38) is arranged and supported on an end face (37) of the threaded spindle (31) facing away from the drive pinion (54) and is connected to the other threaded spindle (30) via the traction means (34) .

## Revendications

1. Station d'estampage de déformation plastique locale d'une zone de serrage de pièce (3, 4), avec au moins une mâchoire d'estampage (5), qui présente une surface de serrage (25) destinée à venir en appui au niveau de la zone de serrage de pièce (3, 4), dans laquelle au moins une partie faisant saillie d'estampage (26) dépasse de la surface de serrage (25), et avec au moins une mâchoire d'appui (6) disposée de manière à faire face par rapport à la mâchoire d'estampage (5), qui est réalisée pour soutenir des forces d'estampage sur la zone de serrage de pièce (3, 4), avec un ensemble de guidage (7), qui est réalisé en vue d'un guidage linéaire de la mâchoire d'estampage (5) et de la mâchoire d'appui (6), et un premier ensemble d'engrenage (22, 30), qui est réalisé en vue d'un réglage de position de la mâchoire d'estampage (5) le long de l'ensemble de guidage (7), et un deuxième ensemble d'engrenage (31), qui est réalisé en vue d'un réglage de position de la mâchoire d'appui (6) le long de l'ensemble de guidage (7), et un dispositif de réglage (38 ; 168 ; 238), qui est réalisé pour régler un espacement entre les deux ensembles d'engrenage (22, 30, 31) et qui comprend un moyen de traction (34 ; 134), réalisé en particulier en tant que tige de traction, servant à appliquer une force d'estampage sur la mâchoire d'estampage (5), dans lequel le dispositif de réglage (168) comprend un levier manuel (170) monté de manière mobile par pivotement au niveau de l'ensemble de guidage et un moyen d'engrenage (168) servant au couplage cinématique du levier manuel (170) au moyen de traction (34 ; 134), qui est couplé à au moins un des ensembles d'engrenage (22, 30, 31), dans lequel le moyen d'engrenage (168) est réalisé en vue d'une conversion d'un déplacement par pivotement du levier manuel (170) en une force de traction sur le moyen de traction (34 ; 134) pour un déplacement relatif linéaire des deux ensembles d'engrenage (22, 30, 31).

2. Station d'estampage de déformation plastique locale d'une zone de serrage de pièce (3, 4), avec au moins une mâchoire d'estampage (5), qui présente une surface de serrage (25) destinée à venir en appui au niveau de la zone de serrage de pièce (3, 4), dans laquelle au moins une partie faisant saillie d'estampage (26) dépasse de la surface de serrage (25), et avec au moins une mâchoire d'appui (6) disposée de manière à faire face par rapport à la mâchoire d'estampage (5), qui est réalisée pour soutenir des forces d'estampage sur la zone de serrage de pièce (3, 4), **caractérisée par** un ensemble de guidage (7), qui est réalisé pour un guidage linéaire de la mâchoire d'estampage (5) et la mâchoire d'appui (6), et un premier ensemble d'engrenage (22, 30), qui est réalisé pour un réglage de position de la mâchoire d'estampage (5) le long de l'ensemble de guidage (7), et un deuxième ensemble d'engrenage (31), qui est réalisé pour un réglage de position de la mâchoire d'appui (6) le long de l'ensemble de guidage (7), et un dispositif de réglage (38 ; 168 ; 238), qui est réalisé pour régler un espacement entre les deux ensembles d'engrenage (22, 30, 31) et qui comprend un moyen de traction (34 ; 134) réalisé en particulier en tant que tige de traction servant à appliquer une force d'estampage sur la mâchoire d'estampage (5), dans laquelle le dispositif de réglage (38, 238) comprend un actionneur linéaire fonctionnant avec une force extérieure, qui est réalisé en vue d'une application d'une force de traction sur le moyen de traction (34 ; 134) pour un déplacement relatif linéaire des deux ensembles d'engrenage (22, 30, 31 ; 230, 231).

3. Station d'estampage selon la revendication 1 ou 2, **caractérisée en ce que** le premier ensemble d'engrenage (22, 30 ; 230) comprend une première broche filetée (30 ; 230) et une section filetée (22) réalisée dans la mâchoire d'estampage (5), et que le deuxième ensemble d'engrenage (31 ; 231) comprend une deuxième broche filetée (31 ; 231) et une section filetée réalisée dans la mâchoire d'appui (6), dans laquelle au moins une des broches filetées (30, 31 ; 230 ; 231) est couplée de manière mobile linéairement et de manière solidaire en rotation à un pignon d'entraînement (54 ; 254), et dans laquelle le pignon d'entraînement (54 ; 254) est réalisé en vue d'un accouplement d'un déplacement par rotation sur les broches filetées (30, 31 ; 230, 231) servant au réglage d'espacement synchrone entre la mâchoire d'estampage (5) et la mâchoire d'appui (6).

4. Station d'estampage selon la revendication 3, **caractérisée en ce que** le pignon d'entraînement (54 ; 254) est couplé à un dispositif d'entraînement (57) actionné manuellement ou actionné par une force extérieure, qui est réalisé pour appliquer un déplacement rotatif sur le pignon d'entraînement (54 ; 254) et qui est soutenu au niveau de l'ensemble de guidage (7).

5. Station d'estampage selon la revendication 3 ou 4, **caractérisée en ce que** le dispositif de réglage (238) est disposé entre le pignon d'entraînement (254) et une des deux broches filetées (230, 231).

6. Station d'estampage selon la revendication 3 ou 4, **caractérisée en ce que** l'actionneur linéaire (38) est disposé et soutenu au niveau d'un côté frontal (37), opposé au pignon d'entraînement (54), de la deuxième broche filetée (31) et est relié à la première broche filetée (30) par l'intermédiaire du moyen de traction (34).

7. Station d'estampage selon la revendication 6, **caractérisée en ce que** la deuxième broche filetée (31) présente un évidement (33), dans lequel est logé le moyen de traction (34 ; 134).

8. Station d'estampage selon l'une quelconque des revendications 4 à 7, **caractérisée en ce que** la première broche filetée (30) et le pignon d'entraînement (54) et/ou la deuxième broche filetée (30, 31) et le pignon d'entraînement (54) présentent des parties faisant saillie (52, 53) et des évidements (73) correspondant les uns aux autres et réalisent un couplage à tiges (50, 51) ou un couplage à griffes.

9. Station d'estampage selon la revendication 7, **caractérisée en ce qu'**est disposé entre la première broche filetée (30) et le pignon d'entraînement (54) et/ou entre la deuxième broche filetée (31) et le pignon d'entraînement (54) au moins un dispositif de ressort (74), qui assure une fente de déplacement entre la première broche filetée (30) et le pignon d'entraînement (54) et/ou entre la deuxième broche filetée (31) et le pignon d'entraînement (54).

10. Station d'estampage de déformation plastique locale d'une zone de serrage de pièce (3, 4), avec au moins une mâchoire d'estampage (5), qui présente une surface de serrage (25) destinée à venir en appui au niveau de la zone de serrage de pièce (3, 4), dans laquelle au moins une partie faisant saillie d'estampage (26) dépasse de la surface de serrage (25), et avec au moins une mâchoire d'appui (6) disposée de manière faire face par rapport à la mâchoire d'estampage (5), qui est réalisée pour soutenir des forces d'estampage sur la zone de serrage de pièce (3, 4), avec un ensemble de guidage (7), qui est réalisé en vue d'un guidage linéaire de la mâchoire d'estampage (5) et la mâchoire d'appui (6), avec un dispositif de réglage (38 ; 168 ; 238), qui est réalisé pour régler un espacement entre un premier ensemble d'engrenage (22, 30, 230) et un deuxième ensemble d'engrenage (31 ; 231) et qui comprend un moyen de traction (34 ; 134) servant à appliquer une force d'estampage sur la mâchoire d'estampage (5), dans laquelle le premier ensemble d'engrenage (22, 30 ; 230) comprend une première broche filetée (30 ; 230) et une section filetée (22) réalisée dans la mâchoire d'estampage (5), dans laquelle le deuxième ensemble d'engrenage (31 ; 231) comprend une deuxième broche filetée (31 ; 231) et une section filetée réalisée dans la mâchoire d'appui (6), dans laquelle les broches filetées (30, 31) présentent respectivement un évidement (33), dans lequel est logé le moyen de traction (34 ; 134), et dans laquelle le dispositif de réglage (38 ; 238) comprend un actionneur linéaire fonctionnant avec une force extérieure, qui est réalisé en vue d'appliquer une force de traction sur le moyen de traction (34 ; 134) pour un déplacement relatif linéaire des deux ensembles d'engrenage (22, 30, 31 ; 230, 231).

11. Station d'estampage selon la revendication 10, dans laquelle au moins une des broches filetées (30, 31 ; 230 ; 231) est couplée de manière mobile linéairement et de manière solidaire en rotation à un pignon d'entraînement (54 ; 254) et dans laquelle le pignon d'entraînement (54 ; 254) est réalisé en vue d'une injection d'un déplacement par rotation sur les broches filetées (30, 31 ; 230, 231) aux fins du réglage d'espacement synchrone entre la mâchoire d'estampage (5) et la mâchoire d'appui (6).

12. Station d'estampage selon la revendication 11, **caractérisée en ce que** le pignon d'entraînement (54 ; 254) est couplé à un dispositif d'entraînement (57) actionné manuellement ou actionné par une force extérieure, qui est réalisé pour appliquer un déplacement rotatif sur le pignon d'entraînement (54 ; 254) et qui est soutenu au niveau de l'ensemble de guidage (7).

13. Station d'estampage selon la revendication 10, 11 ou 12, **caractérisée en ce que** l'actionneur linéaire (38) est disposé et soutenu au niveau d'un côté frontal (37), opposé au pignon d'entraînement (54), de la broche filetée (31) et est relié à l'autre broche filetée (30) par l'intermédiaire du moyen de traction (34).
